# EUROPEAN PATENT APPLICATION

(11) **EP 4 044 078 A1**
(43) Date of publication of application: **17.08.2022**
(21) Application number: 20875082.8
(22) Date of filing: 02.10.2020
(51) Int. Cl.: G06Q 10/04, G06Q 10/06

(54) **INFORMATION PROCESSING DEVICE, INFORMATION PROCESSING METHOD, AND PROGRAM**

(30) Priority: 11.10.2019 JP 2019187973
(71) Applicant: Kyocera Corporation, Kyoto-shi Kyoto 612-8501 (JP)
(72) Inventor: UTAMARU Tsudoi, Kyoto-shi, Kyoto 612-8501 (JP)
(74) Representative: TBK
(86) International application number: PCT/JP2020/037560
(87) International publication number: WO 2021/070745

(57) **Abstract**

An information processing apparatus that outputs information for identifying a combination of batteries including a solar battery, a fuel cell, and a storage battery includes a storage unit and a control unit. The storage unit stores effects of each of solar batteries, fuel cells, and storage batteries constituting the combinations of batteries from an environmental perspective, a safety perspective, and an economical perspective. The control unit performs control such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.

## Description

### Cross References to Related Applications

The present application claims priority to Japanese Patent Application No. 2019-187973, filed October 11, 2019. The contents of this prior application are incorporated herein by reference in their entirety.

### Technical Field

The present invention relates to an information processing apparatus, an information processing method, and a program.

### Background Art

In recent years, distributed energy resource (DER) systems such as solar batteries, fuel cells, and storage batteries are becoming more and more popular. Attempts are being made to use electricity efficiently by appropriately introducing these DER systems. Due in part to a recent rise in awareness of energy conservation, efficient use of electricity is desired at general households and manufacturing sites and offices where more than a certain amount of energy is used. As an attempt to use electricity efficiently, for example, PTL 1 proposes an energy conservation diagnosis system that reduces electrical charges of a user that meet a condition for introducing energy-saving devices specified by the user.

### Citation List

### Patent Literature

PTL 1: Japanese Unexamined Patent Application Publication No. 2002-49723

### Summary of Invention

An information processing apparatus according to an embodiment outputs information for identifying a combination of batteries including a solar battery, a fuel cell, and a storage battery.

The information processing apparatus includes a storage unit and a control unit.

The storage unit stores effects of each of solar batteries, fuel cells, and storage batteries constituting the combinations of batteries from an environmental perspective, a safety perspective, and an economical perspective.

The control unit performs control such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.

A method according to another embodiment is an information processing method for outputting information for identifying a combination of batteries including a solar battery, a fuel cell, and a storage battery.

The information processing method includes a storage step and a control step.

In the storage step, effects of each of solar batteries, fuel cells, and storage batteries constituting the combinations of batteries from an environmental perspective, a safety perspective, and an economical perspective are stored.

In the control step, control is performed such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.

A program according to another embodiment is a program for outputting information for identifying a combination of batteries including a solar battery, a fuel cell, and a storage battery.

The program causes a computer to perform a storage step and a control step.

In the storage step, effects of each of solar batteries, fuel cells, and storage batteries constituting the combinations of batteries from an environmental perspective, a safety perspective, and an economical perspective are stored.

In the control step, control is performed such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output. Brief Description of Drawings

[Fig. 1] Fig. 1 is a functional block diagram illustrating a schematic configuration of an information processing apparatus according to an embodiment.
[Fig. 2] Fig. 2 is a flowchart illustrating an example of a process performed by the information processing apparatus according to the embodiment.
[Fig. 3] Fig. 3 is a diagram illustrating an example of operation of the information processing apparatus according to the embodiment.
[Fig. 4] Fig. 4 is a diagram illustrating the example of the operation of the information processing apparatus according to the embodiment.
[Fig. 5] Fig. 5 is a diagram illustrating the example of the operation of the information processing apparatus according to the embodiment.
[Fig. 6] Fig. 6 is a diagram illustrating the example of the operation of the information processing apparatus according to the embodiment.

### Description of Embodiments

When a DER system is newly introduced or the configuration of an existing DER system is changed, it is extremely beneficial to present combinations of a solar battery, a fuel cell, and a storage battery from an environmental perspective, a safety perspective, and an economical perspective. An objective of the present disclosure is to provide an information processing apparatus, an information processing method, and a program that present combinations of a solar battery, a fuel cell, and a storage battery from the environmental perspective, the safety perspective, and the economical perspective. According to an embodiment, the information processing apparatus, the information processing method, and the program that present combinations of a solar battery, a fuel cell, and a storage battery from the environmental perspective, the safety perspective, and the economical perspectives can be provided. The information processing apparatus according to the embodiment will be described hereinafter with reference to the drawings.

The information processing apparatus according to the embodiment performs certain processing on the basis of information input by a user, information stored in the information processing apparatus, information obtained from the outside of the information processing apparatus, and the like and outputs a result of the processing. The information processing apparatus according to the embodiment may be, for example, a specially designed terminal. Alternatively, the information processing apparatus according to the embodiment may employ one of various configurations, such as a personal computer (PC), a laptop PC, a tablet terminal, a smartphone, a gaming terminal, and a mobile phone on which application software is installed.

The information processing apparatus according to the embodiment may be used by a user in a general household who is considering, for example, introduction of batteries including a solar battery, a fuel cell, and a storage battery or a change to the configuration of such a combination. Alternatively, the information processing apparatus according to the embodiment may be used by a user at a company based in a manufacturing site, an office, or the like where more than a certain amount of energy is used.

When conditions such as ranges of capacity of batteries including a solar battery, a fuel cell, and a storage battery are specified, the information processing apparatus according to the embodiment outputs information for identifying, among combinations of batteries that satisfy the conditions, appropriate combinations from the environmental perspective, the safety perspective, and the economical perspective. With the information processing apparatus according to the embodiment, the user can input desired conditions and obtain information regarding environmentally conscious, safe, economical combinations among combinations of batteries including a solar battery, a fuel cell, and a storage battery that satisfy the condition. With the information processing apparatus according to the embodiment, therefore, combinations of a solar battery, a fuel cell, and a storage battery can be presented to the user from the environmental perspective, the safety perspective, and the economical perspective.

A solar battery, a fuel cell, and a storage battery will also be simply referred to as "three batteries" hereinafter. In addition, the environmental perspective, the safety perspective, and the economical perspective will be simply referred to as "three perspectives" hereinafter. Each of the three perspectives will be further described later. The safety perspective may be, for example, a perspective about whether energy is stably supplied, that is, a perspective of stability of energy supply or the like. Furthermore, the safety perspective may be a perspective about a degree of reassurance to the user or the like.

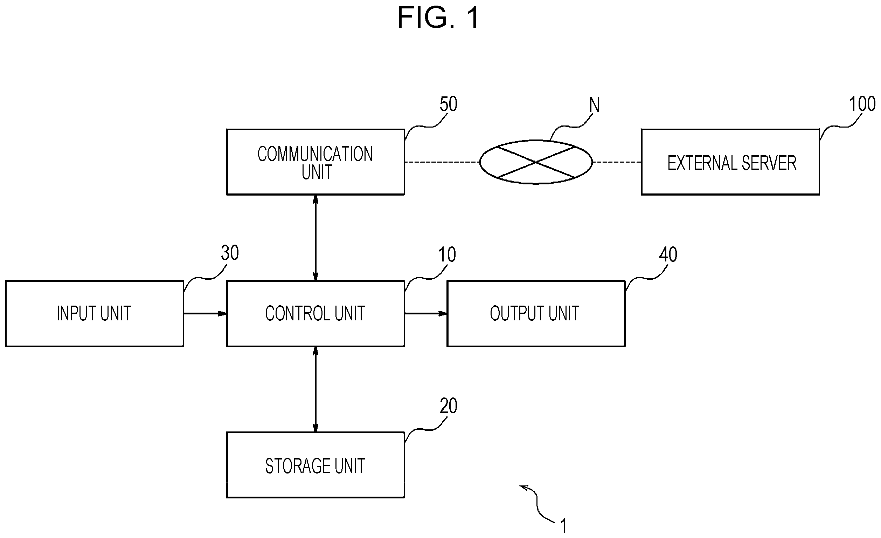

Fig. 1 is a functional block diagram illustrating a schematic configuration of the information processing apparatus according to the embodiment. As illustrated in Fig. 1, an information processing apparatus 1 according to the embodiment includes a control unit 10, a storage unit 20, an input unit 30, an output unit 40, and a communication unit 50. In addition, as illustrated in Fig. 1, the information processing apparatus 1 according to the embodiment can be connected to an external device such as an external server 100 by wire or wirelessly, such as over a network N.

The control unit 10 may include at least one processor such as a CPU (central processing unit) in order to provide control and processing capabilities for executing various functions. The control unit 10 may be collectively achieved by one processor or several processors, or may be individually achieved by different processors. The processor may be achieved as a single integrated circuit. The integrated circuit is also called an IC. The processor may be achieved as a plurality of integrated circuits and discrete circuits communicably connected to one another.

The processor may be achieved on the basis of various other known techniques, instead. In the embodiment, the control unit 10 may be achieved as, for example, a CPU and a program to be executed by the CPU. The program to be executed by the control unit 10 and results of processing performed by the control unit 10 may be stored in the storage unit 20. Operation of the control unit 10 of the information processing apparatus 1 according to the embodiment will be further described later.

The storage unit 20 stores various pieces of information obtained from the control unit 10, the communication unit 50, and the like. In the embodiment, the storage unit 20 may also store information input by the user or the like using the input unit 30. In addition, the storage unit 20 stores the program and the like to be executed by the control unit 10. The storage unit 20 also stores various pieces of data such as results of processing performed by the control unit 10. Furthermore, the storage unit 20 may also include a work memory or the like used when the control unit 10 operates. The storage unit 20 may be achieved by a semiconductor memory or a magnetic disk, for example, but is not limited to these and may be any storage device. For example, the storage unit 20 may be a storage medium such as a memory card inserted into the information processing apparatus 1 according to the present embodiment. Alternatively, the storage unit 20 may be an internal memory of the CPU used as the control unit 10.

The input unit 30 detects operations input by the user. The input unit 30 may be at least one of various input devices such as a dedicated controller, a keyboard, and a mouse. When the output unit 40 is a display unit such as a liquid crystal display (LCD), for example, the input unit 30 may detect inputs corresponding to information displayed on the display unit. In the embodiment, the input unit 30 can detect an operation performed by the user, such as movement of a cursor, a pointer, or the like to an object of an icon displayed on the display unit. In addition, the input unit 30 can detect an input corresponding to information such as an object, that is, an input by the user for selecting an object or the like.

Alternatively, the input unit 30 may be a touch panel that detects operations where the user directly touches the touch panel with a finger or the like. Especially when the touch panel is composed of a transparent material and provided on a front surface of the display unit, operations where the user directly touches an object of an icon displayed on the display unit can be detected. The input unit 30 achieved by a touch panel having such a configuration, therefore, can provide intuitive operation for the user. A configuration in which the input unit 30 achieved by a transparent touch panel is provided on the front surface of the display unit will be assumed hereinafter in the description of the present embodiment.

As described above, the output unit 40 may be a display unit such as an LCD. When the information processing apparatus 1 does not include a display unit such as an LCD, the output unit 40 may be an interface for external output.

When the output unit 40 is a display unit, the display unit may display information indicating results of processing of information performed by the information processing apparatus 1. In this case, the display unit may be achieved by one of various display apparatuses such as an LCD and an organic EL display. The display unit can display not only letters, numbers, and signs but also objects of various icons. In addition, in the present embodiment, the display unit may be one that employs monochrome or grayscale display, but may be one capable of achieving color display, instead, in order to enable a general user to easily understand displayed information at a glance.

When the output unit 40 is an interface for external output, the output unit 40 may be an interface, such as an LCD or an organic EL display, for connecting the information processing apparatus 1 to various display apparatuses. When the information processing apparatus 1 is connected to an external display apparatus by wire, the interface may be a receptacle of a connector for connecting cable connected to the display apparatus to the information processing apparatus 1. When the information processing apparatus 1 is wirelessly connected to a display apparatus, on the other hand, the interface may be a radio unit that achieves a communication unit that transmits signals to the display apparatus and that receives signals from the display apparatus. In these cases, the display apparatus, too, is assumed to include an interface corresponding to that of the information processing apparatus 1.

The communication unit 50 can achieve various functions including wireless communication. The communication unit 50 may achieve communication based on one of various communication methods including LTE (long term evolution). The communication unit 50 may include, for example, a modem whose communication method is standardized by the ITU-T (International Telecommunication Union Telecommunication Standardization Sector). Alternatively, the communication unit 50 may achieve wireless communication based on one of various methods such as Wi-Fi and Bluetooth (registered trademark). The communication unit 50 may wirelessly communicate with, for example, a communication unit of the external server 100 through, for example, an antenna. Various pieces of information communicated by the communication unit 50 may be stored in, for example, the storage unit 20. The communication unit 50 may include, for example, an antenna for transmitting and receiving radio waves and an appropriate RF unit. Because the communication unit 50 can be achieved by a known technique for performing wireless communication, more detailed description of hardware is omitted. The communication unit 50 may also wirelessly communicate with, for example, communication unit of information processing apparatuses other than the external server 100.

The network N is achieved by wire, wireless, or a combination of wire and wireless. The network N may be any network, such as the Internet or an intranet, insofar as the information processing apparatus 1 and another information processing apparatus such as the external server 100 can communicate with each other.

The external server 100 may be any information processing apparatus insofar as the external server 100 can be connected to the information processing apparatus 1 over the network N. For example, the external server 100 may be a database server or an application server. Alternatively, the external server 100 may be, for example, a cloud server. The external server 100 may also communicate with information processing apparatuses other than the information processing apparatus 1. In the present disclosure, the information processing apparatus 1 and the external server 100 may be wirelessly connected to each other. Alternatively, in the present disclosure, for example, some sections between the external server 100 and the network N may be achieved by wire. Another configuration may be employed as the configuration of the network N in the present disclosure, instead.

The information processing apparatus 1 can transmit various pieces of information regarding the information processing apparatus 1 to the external server 100 by communicating with the external server 100. In addition, the information processing apparatus 1 can receive various pieces of information from the external server 100 by communicating with the external server 100. As a result, for example, the information processing apparatus 1 can obtain, from the external server 100, information that is not stored in the storage unit 20 or information that has not been input by the user.

Next, an example of the operation of the information processing apparatus 1 according to the embodiment will be described.

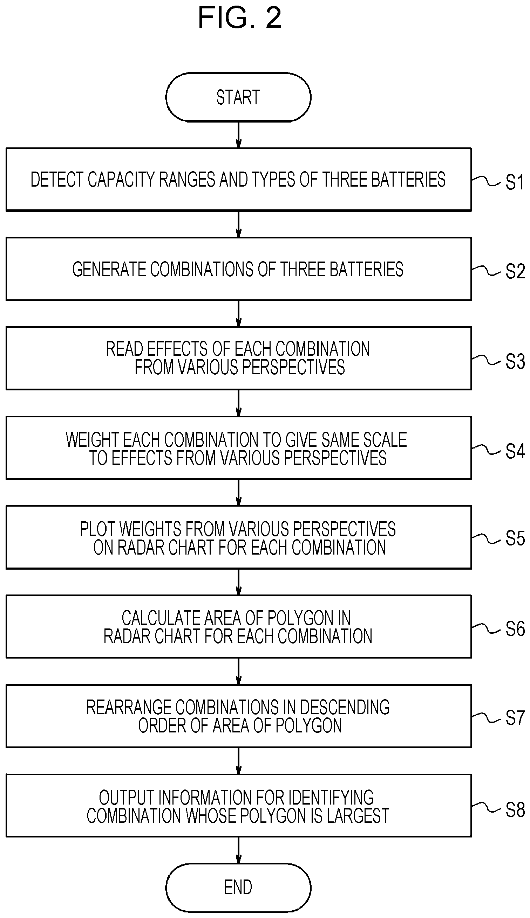

Fig. 2 is a flowchart illustrating an example of a process performed by the information processing apparatus 1 according to the embodiment. The process illustrated in Fig. 2 may begin when the user performs an input operation on the input unit 30 of the information processing apparatus 1.

When the operation illustrated in Fig. 2 begins, the control unit 10 of the information processing apparatus 1 detects capacity ranges and types of three batteries input from the input unit 30 (step S1).

In step S1, for example, the control unit 10 may detect information regarding capacity ranges of a solar battery, a fuel cell, and a storage battery and/or information regarding types of these batteries input from the input unit 30.

Here, the capacity ranges of the solar battery, the fuel cell, and the storage battery may be ranges of power that can be output from these batteries. For example, the capacity ranges of the solar battery and the fuel cell may be ranges of power (e.g., a unit is kW) that can be generated by these batteries. In addition, for example, the capacity range of the storage battery may be a range of power (e.g., a unit is kW) that can be discharged by the storage battery. Here, the capacity range of the storage battery may also include a range of capacity (e.g., a unit is kWh) in addition to the range of power that can be discharged by the storage battery. The capacity ranges of the three batteries may each be, for example, a range from a lower limit to an upper limit of power that can be output from a battery assumed (e.g., introduction is considered) by the user. When a certain user is considering introduction of a solar battery of 10 kW at maximum, for example, an upper limit of the capacity range of the solar battery may be 10 kW. In addition, when a certain user is considering a possibility of not introducing a solar battery, for example, a lower limit of the capacity range of the solar battery may be 0 kW. The user may set the capacity ranges of the three batteries as desired for at least one of the three batteries that the user is considering introduction of. In addition, in a simplified embodiment, the control unit 10 may detect inputs of capacity values of the three batteries, instead of the capacity ranges of the three batteries.

In addition, the types of solar battery, fuel cell, and storage battery may be based on structures and/or characteristics of these batteries. For example, the type of solar battery may be a silicon-based polycrystalline solar battery, a silicon-based monocrystalline solar battery, a thin-film solar battery such as a CIGS, or the like. Alternatively, the type of solar battery may be simply based on the magnitude of an output or the like. In addition, for example, the type of fuel cell may be a solid oxide fuel cell (SOFC), a polymer electrolyte fuel cell (PEFC), a phosphoric acid fuel cell (PAFC), a molten carbonate fuel cell (MCFC), or the like. Alternatively, the type of fuel cell may be simply based on the magnitude of an output or the like. In addition, for example, the type of storage battery may be a lithium ion battery, a nickel metal hydride battery, or the like. Alternatively, the type of storage battery may be simply based on the magnitude of an output (discharge of charged power) or the like. In a simplified embodiment, in step S1, the user may be prompted to input only the capacity ranges of the three batteries and the input may be detected, and an input of the types of three batteries need not be detected.

Furthermore, in step S1, the control unit 10 may prompt the user to input a condition other than the capacity ranges and the types of three batteries, and then detect the input, instead. Here, the other condition may be, for example, a cost (hereinafter referred to as an "initial cost") acceptable to the user for the introduction of equipment of the three batteries or the like. Alternatively, the other condition may be, for example, a period (hereinafter referred to as a "payback period") over which costs of the introduction of the equipment of the three batteries can be recovered as a result of the introduction of the three batteries or the like. Alternatively, the other condition may be, for example, the amount of electrical charges and gas charges expected to be reduced (hereinafter referred to as "fuel and lighting cost reduction effect") as a result of the introduction of the three batteries or the like. Alternatively, the other condition may be, for example, the area of a roof (hereinafter referred to as "roof area") of a building or the like on which the user is planning to install the solar battery among the three batteries. Alternatively, the other condition may be, for example, load bearing performance of a roof (hereinafter referred to as "roof strength") of a building or the like on which the user is planning to install the solar battery among the three batteries. Alternatively, the other condition may be, for example, the area of a wall (hereinafter referred to as "wall area") of a building or the like on which the user is planning to install the solar battery among the three batteries. Alternatively, the other condition may be a value acceptable as noise (hereinafter referred to as "acceptable noise") or the like caused by the fuel cell among the three batteries. In the embodiment, the other condition may be one of various certain conditions other than the above-described ones, instead.

After detecting the capacity ranges and the types of three batteries in step S1, the control unit 10 generates combinations of the three batteries (step S2). In step S2, the control unit 10 may generate combinations of the three batteries that satisfy the capacity ranges and the types of three batteries detected in step S1. When there are ten solar batteries, ten fuel cells, and ten storages batteries that satisfy the conditions of the capacity ranges and the types detected in step S1, for example, there are 1,000 possible combinations of the three batteries that are generated in step S2. The control unit 10 may store the combinations of the three batteries generated in step S2 in the storage unit 20.

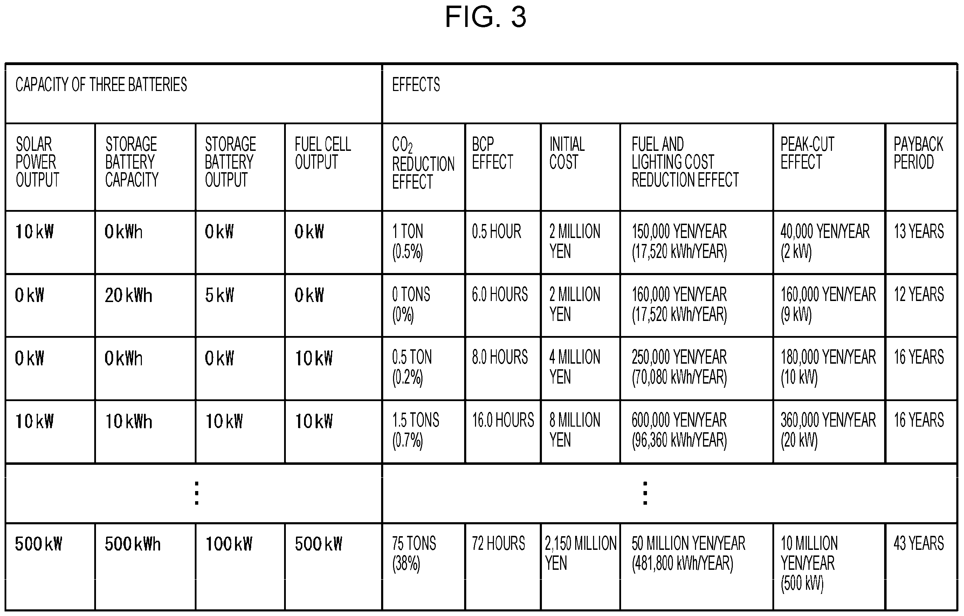

Fig. 3 is a diagram partially illustrating an example of the combinations of the three batteries generated in step S2. A left part of Fig. 3 partially illustrates an example of the combinations of the three batteries generated in step S2. In Fig. 3, for example, solar power output may indicate an output (unit: kW) of power generated by the solar battery. Storage battery capacity may indicate a capacity (unit: kWh) that can be charged by the storage battery. Storage battery output may indicate an output (unit: kW) of power that can be discharged by the storage battery. Fuel cell output may indicate an output (unit: kW) of power generated by the fuel cell.

In Fig. 3, solar power output may be shown in 10 kW increments, for example, from 0 kW to 500 kW. In this case, solar batteries with 10 kW increments from 0 kW to 500 kW may be actually available on the market. Storage battery capacity may be shown in 10 kW increments, for example, from 0 kWh to 500 kWh. In this case, storage batteries with 10 kW increments from 0 kWh to 500 kWh may be actually available on the market. Storage battery output may be shown in 5 kW increments, for example, from 0 kW to 100 kW. In this case, storage batteries with 5 kW increments from 0 kW to 100 kW may be actually available on the market. Fuel cell output may be shown in 10 kW increments, for example, from 0 kW to 500 kW. In this case, fuel cells with 10 kW increments from 0 kW to 500 kW may be actually available on the market.

When all of the above-described combinations are displayed, there are too many combinations. Fig. 3, therefore, illustrates only part of the combinations of the three batteries. For example, a combination of the three batteries in a first row illustrated in Fig. 3 indicates a combination (hereinafter referred to as "combination 1") where a solar battery having an output of 10 kW is selected and a storage battery and a fuel cell are not selected. A combination of the three batteries in a second row illustrated in Fig. 3 indicates a combination (hereinafter referred to as "combination 2") where a solar battery and a fuel cell are not selected and a storage battery having an output of 5 kW (a capacity of 20 kWh) is selected. A combination of the three batteries in a third row illustrated in Fig. 3 indicates a combination (hereinafter referred to as "combination 3") where a solar battery and a storage battery are not selected and a storage battery having an output of 5 kW is selected. A combination of the three batteries in a fourth row illustrated in Fig. 3 indicates a combination (hereinafter referred to as "combination 4") where a solar battery, a fuel cell, and a storage battery (a capacity of 10 kWh) each having an output of 10 kW are selected. When outputs of all the three batteries are zero in Fig. 3, it means that none of the three batteries is selected. Such a combination, therefore, is excluded.

After generating the combinations of the three batteries in step S2, the control unit 10 reads, from the storage unit 20, an effect of each of the three batteries from each of the three perspectives for each of the combinations (step S3). In order to perform the processing in step S3, the storage unit 20 may store in advance the effect of each of the three batteries constituting each of the combinations of the three batteries from each of the three perspectives. The effect from each of the three perspectives will be further described hereinafter.

In the embodiment, the storage unit 20 may store in advance a carbon dioxide (CO₂) reduction effect (hereinafter also referred to as a CO₂ reduction effect) produced as a result of introduction of each of the three batteries as an effect from the environmental perspective among the three perspectives. Generation of power that does not accompany combustion on the ground as in the case of generation of power using a solar battery, for example, is known to produce the CO₂ reduction effect. The storage unit 20, therefore, may store the amount of CO₂ expected to be reduced by a solar battery, for example, for each of 10 kW increments of an output of the solar battery. For example, the storage unit 20 may store the amount of CO₂ expected to be reduced by a solar battery for each of 10 kW, 20 kW, 30 kW, and the like of an output of the solar battery. Alternatively, the storage unit 20 may store a formula and an initial condition of a function indicating the amount of CO₂ expected to be reduced by a solar battery. Here, the CO₂ reduction effect may be, for example, an effect of reducing generation of CO₂ at a facility in which the user is planning to install a combination of the three batteries. The storage unit 20 may also store, as for the solar battery, the amount of CO₂ expected to be reduced by each of a storage battery and a fuel cell for each of 10 kW increments of an output of the storage battery or the fuel cell.

A right part of Fig. 3 illustrates effects of the combinations of the three batteries illustrated in the left part from the three perspectives. Among the effects of the combinations of the three batteries illustrated in Fig. 3 from the three perspectives, the effects from the environmental perspective may correspond to, for example, CO₂ reduction effects.

Fig. 3 indicates that the CO₂ reduction effect of combination 1 in a certain period of time, that is, the CO₂ reduction effect of the solar battery having an output of 10 kW in a certain period of time, is 1 ton. Fig. 3 also indicates that the CO₂ reduction effect of combination 2 in the certain period of time, that is, the CO₂ reduction effect of the storage battery having an output of 5 kW (a capacity of 20 kWh) in the certain period of time, is 0 ton. Fig. 3 also indicates that the CO₂ reduction effect of combination 3 in the certain period of time, that is, the CO₂ reduction effect of the fuel cell having an output of 10 kW in the certain period of time, is 0.5 ton. Fig. 3 also indicates that the CO₂ reduction effect of combination 4 in the certain period of time, that is, the CO₂ reduction effect of the solar battery, the fuel cell, and the storage battery (a capacity of 10 kWh) each having an output of 10 kW in the certain period, is 1.5 tons.

Such an effect of a combination of the three batteries from the environmental perspective may be obtained, for example, by summing up effects of batteries stored in the storage unit 20 in advance for the three batteries. As for an effect of a combination of the three batteries from the environmental perspective, for example, an effect that can be different between different combinations of the three batteries may be stored in the storage unit 20 in advance.

In the embodiment, the storage unit 20 may thus store an effect, produced by each of three batteries constituting a combination of batteries including the three batteries, of reducing generation of carbon dioxide at a facility provided with the combination of the batteries as an effect from the environmental perspective among the three perspectives.

In the embodiment, the storage unit 20 may store in advance an effect (hereinafter referred to as a BCP effect) of promoting a business continuity plan (BCP) produced as a result of introduction of each of the three batteries as an effect from the safety perspective among the three perspectives. As described above, the safety perspective may be, for example, a perspective about whether energy is stably supplied, that is, a perspective of stability of energy supply or the like. Furthermore, the safety perspective may be a perspective about a degree of reassurance to the user, that is, a perspective of reassurance or the like. A BCP is a plan for a company to enable continuation or early recovery of core business operations while minimizing damage to business assets in an event of an emergency situation such as a natural disaster, a major fire, or a terrorist attack. More specifically, a BCP may refer to a plan to determine activities to be carried out during normal times and/or methods or means for continuing business operations in an event of an emergency.

When power is continuously supplied even in an emergency such as a power failure, for example, most business operations can continue without a stop. The storage unit 20, therefore, may store a period of time for which promotion of a BCP can be expected by each of the three batteries, for example, for each of 10 kW increments of an output of the battery. For example, the storage unit 20 may store a period of time for which promotion of a BCP can be expected by each of the three batteries for each of 10 kW, 20 kW, 30 kW, and the like of the output of the battery. Alternatively, the storage unit 20 may store a formula and an initial condition of a function indicating a period of time for which promotion of a BCP can be expected by each of the three batteries. Here, the BCP effect may be, for example, an effect of promoting a BCP at a facility in which the user is planning to install a combination of the three batteries.

The right part of Fig. 3 illustrates the effects of the combinations of the three batteries illustrated in the left part from the three perspectives. The effects of the combinations of the three batteries illustrated in Fig. 3 from the safety perspective among the three perspectives may correspond to, for example, BCP effects. Fig. 3 indicates that the BCP effect of combination 1 is 0.5 hour, the BCP effect of combination 2 is 6.0 hours, the BPC effect of combination 3 is 8.0 hours, and the BCP effect of combination 4 is 16.0 hours.

Such an effect of a combination of the three batteries from the safety perspective may be obtained, for example, by summing up effects of batteries stored in the storage unit 20 in advance for the three batteries. Alternatively, as for an effect of a combination of the three batteries from the safety perspective, for example, an effect that can be different between different combinations of the three batteries may be stored in the storage unit 20 in advance.

In the embodiment, the storage unit 20 may thus store an effect, produced by each of three batteries constituting a combination of batteries including the three batteries, of promoting a business continuity plan at a facility provided with the combination of the batteries as an effect from the safety perspective among the three perspectives.

In the embodiment, the storage unit 20 may store in advance costs (hereinafter also referred to as initial costs) assumed to be required at an initial stage of introduction of each of the three batteries as an effect from the economical perspective among the three perspectives. When each of the three batteries is introduced, for example, it is assumed that various initial costs including not only an equipment cost but also an installation cost occur. The storage unit 20, therefore, may store costs of installation of each of the three batteries constituting a combination of batteries, for example, for each of 10 kW increments of an output of the battery. For example, the storage unit 20 may store costs estimated to be required for introduction of each of the three batteries for each of 10 kW, 20 kW, 30 kW, and the like of an output of the battery. Alternatively, the storage unit 20 may store a formula and an initial condition of a function indicating costs estimated to be required for introduction of each of the three batteries.

The effects of the combinations of the three batteries illustrated in Fig. 3 from the economical perspective among the three perspectives may correspond to, for example, initial costs. Fig. 3 indicates that initial costs of combination 1 are 2 million yen, initial costs of combination 2, too, are 2 million yen, initial costs of combination of 3 are 4 million yen, and initial costs of combination 4 are 8 million yen.

Such an effect of a combination of the three batteries from the economical perspective may be obtained, for example, by summing up initial costs of batteries stored in the storage unit 20 in advance for the three batteries. Alternatively, as for an effect of a combination of the three batteries from the economical perspective, for example, the storage unit 20 may store in advance initial costs that can be different between different combinations of batteries.

In the embodiment, the storage unit 20 may thus store initial costs of installation of each of three batteries constituting a combination of batteries including the three batteries as an effect from the economical perspective among the three perspectives.

In the embodiment, the storage unit 20 may store in advance an effect of reducing electrical charges and/or gas charges (hereinafter also referred to as a fuel and lighting cost reduction effect) produced as a result of introduction of each of the three batteries as an effect from the economical perspective among the three perspectives. Since the solar battery can generate power and the storage battery can charge and discharge power as a result of introduction of the three batteries, for example, electrical charges and/or gas charges are expected to be reduced to a certain degree. The storage unit 20, therefore, may store a fuel and lighting cost expected to be reduced as a result of introduction of each of the three batteries, for example, for each of 10 kW increments of an output of the battery. For example, the storage unit 20 may store a fuel and lighting cost expected to be reduced as a result of introduction of each of the three batteries for each of 10 kW, 20 kW, 30 kW, and the like of the output of the battery. Alternatively, the storage unit 20 may store a formula and an initial condition of a function indicating a fuel and lighting cost expected to be reduced as a result of introduction of each of the three batteries. Here, the fuel and lighting cost reduction effect may be, for example, an effect of reducing a fuel and lighting cost at a facility in which the user is planning to install a combination of the three batteries.

Among the effects of the combinations of the three batteries illustrated in Fig. 3 from the three perspectives, the effects from the economical perspective may correspond to, for example, fuel and lighting cost reduction effects. Fig. 3 indicates that the fuel and lighting cost reduction effect of combination 1 is 150,000 yen per year, the fuel and lighting cost reduction effect of combination 2 is 160,000 yen per year, the fuel and lighting cost reduction effect of combination 3 is 250,000 yen per year, and the fuel and lighting cost reduction effect of combination 4 is 600,000 yen per year.

Such an effect of a combination of the three batteries from the economical perspective may be obtained, for example, by summing up fuel and lighting cost reduction effects of batteries stored in the storage unit 20 in advance for the three batteries. Alternatively, as for an effect of a combination of the three batteries from the economical perspective, for example, the storage unit 20 may store in advance a fuel and lighting cost reduction effect that can be different between different combinations of the three batteries.

In the embodiment, the storage unit 20 may thus store a fuel and lighting cost reduced by each of three batteries constituting a combination of batteries including the three batteries at a facility provided with the combination of the batteries as an effect from the economical perspective among the three perspective.

In the embodiment, the storage unit 20 may store in advance an effect of cutting peaks of power consumption (hereinafter also referred to as a peak-cut effect) produced as a result of introduction of each of the three batteries as an effect from the economical perspective among the three perspectives. Since the solar battery can generate power and the storage battery can charge and discharge power by introducing the three batteries, for example, it is expected that peaks of power consumption can be cut to a certain degree. The storage unit 20, therefore, may store electrical charges corresponding to a peak-cut effect expected as a result of introduction of each of the three batteries, for example, for each of 10 kW increments of an output of the battery. For example, the storage unit 20 may store electrical charges corresponding to a peak-cut effect expected as a result of introduction of each of the three batteries for each of 10 kW, 20 kW, 30 kW, and the like of the output of the battery. Alternatively, the storage unit 20 may store a formula and an initial condition of a function indicating electrical charges corresponding to a peak-cut effect expected as a result of introduction of each of the three batteries. Here, the peak-cut effect may be, for example, an effect of cutting peaks of power consumption at a facility in which the user is planning to install a combination of the three batteries.

Among the effects of the combinations of the three batteries illustrated in Fig. 3 from the three perspectives, the effects from the economical perspective may correspond to, for example, peak-cut effects. Fig. 3 indicates that the peak-cut effect of combination 1 corresponds to 40,000 yen per year, the peak-cut effect of combination 2 corresponds to 160,000 yen per year, the peak-cut effect of combination 3 corresponds to 180,000 yen per year, and the peak-cut effect of combination 4 corresponds to 360,000 yen per year.

Such an effect of a combination of the three batteries from the economical perspective may be obtained, for example, by summing up electrical charges corresponding to peak-cut effects of batteries stored in the storage unit 20 in advance for the three batteries. Alternatively, as for an effect of a combination of the three batteries from the economical perspective, for example, the storage unit 20 may store in advance electrical charges corresponding to a peak-cut effect that can be different between different combinations of the three batteries.

In the embodiment, the storage unit 20 may thus store a peak-cut effect produced by each of three batteries constituting a combination of batteries including the three batteries at a facility provided with the combination of the batteries as an effect from the economical perspective among the three perspectives.

In the embodiment, the storage unit 20 may store in advance a period of time (hereinafter also referred to as a payback period) over which costs of introduction and/or maintenance of each of the three batteries can be recovered as an effect from the economical perspective among the three perspective. Since the solar battery and the fuel cell can generate power and the storage battery can charge and discharge power by introducing each of the three batteries, for example, it is expected that electrical charges can be reduced to a certain degree. Costs invested as initial costs of introduction of each of the three batteries and a maintenance cost after the introduction, therefore, are expected to be recovered by using the battery continuously. The storage unit 20, therefore, may store a payback period expected as a result of introduction of each of the three batteries, for example, for each of 10 kW increments of an output of the battery. For example, the storage unit 20 may store a payback period expected as a result of introduction of each of the three batteries for each of 10 kW, 20 kW, 30 kW, and the like of the output of the battery. Alternatively, the storage unit 20 may store a formula and an initial condition of a function indicating a payback period expected as a result of introduction of each of the three batteries.

Among the effects of the combinations of the three batteries illustrated in Fig. 3 from the three perspectives, the effects from the economical perspective may correspond to, for example, payback periods. Fig. 3 indicates that the payback period of combination 1 is 13 years, the payback period of combination 2 is 12 years, the payback period of combination 3 is 16 years, and the payback period of combination 4 is 16 years.

Such an effect of a combination of the three batteries from the economical perspective may be obtained, for example, by summing up payback periods of batteries stored in the storage unit 20 in advance for the three batteries. Alternatively, as for an effect of a combination of the three batteries from the economical perspective, for example, the storage unit 20 may store in advance a payback period that can be different between different combinations of the three batteries.

In the embodiment, the storage unit 20 may thus store invested costs of installation and/or maintenance of each of three batteries constituting a combination of batteries including the three batteries as an effect from the economical perspective among the three perspectives.

As described above, in the embodiment, the storage unit 20 stores effects of each of three batteries constituting a combination of batteries including the three batteries from the three perspectives. Fig. 3 may be regarded as illustrating a state where the control unit 10 has read, from the storage unit 20, an effect of each of the three batteries from each of the three perspectives from each of the combinations of batteries in step S3.

After reading the effects from the three perspectives in step S3 illustrated in Fig. 2, the control unit 10 weights the effects of each of the combinations of the three batteries from the three perspectives (step S4). In step S4, the control unit 10 may weight the effects in such a way as to give the same scale to the effects from the three perspectives. The weighting of the effects from the three perspectives will be further described hereinafter.

In the information processing apparatus 1 according to the embodiment, the control unit 10 determines, among a plurality of (typically a large number of) combinations of the three batteries such as those illustrated in Fig. 3, a combination whose effects from the three perspectives are well-balanced. In order to perform such processing, the control unit 10 weights effects of elements (the CO₂ reduction effect, the BCP effect, the initial costs, and the like illustrated in Fig. 3) constituting the three perspectives such that the effects have equal scale weights. As illustrated in Fig. 3, units of the elements constituting the effects from the three perspectives are not in the same dimension, such as weight, time, and the amount of money. In order to determine a combination whose elements are well-balanced, however, these elements are weighted on the same scale. Here, when the elements are weighted on the same scale, differences between maximum values and minimum values of values indicating the elements may be set to the same value (e.g., 100) for each of the different combinations of the three batteries. In an example, the weighting may be performed as follows.

For example, because the CO₂ reduction effect (hereinafter also referred to as element A) illustrated in Fig. 3 is more advantageous when the effect is greater, the maximum value may be 100, and the minimum value may be 0.

In addition, because the BCP effect (hereinafter also referred to as element B) illustrated in Fig. 3 is more advantageous when the effect is greater (longer), the maximum value may be 100, and the minimum value may be 0.

In addition, because the initial costs (hereinafter also referred to as element C) illustrated in Fig. 3 are more advantageous when the initial costs are smaller (lower), the maximum value may be 0, and the minimum value may be 100.

In addition, because the fuel and lighting cost reduction effect (hereinafter also referred to as element D) illustrated in Fig. 3 is more advantageous when the effect is greater (higher), the maximum value may be 100, and the minimum value may be 0.

In addition, because the peak-cut effect (hereinafter also referred to as element E) illustrated in Fig. 3 is more advantageous when the effect is greater (higher), the maximum value may be 100, and the minimum value may be 0.

In addition, because the payback period (hereinafter referred to as element F) illustrated in Fig. 3 is more advantageous when the period is smaller (shorter), the maximum value may be 0, and the minimum value may be 100.

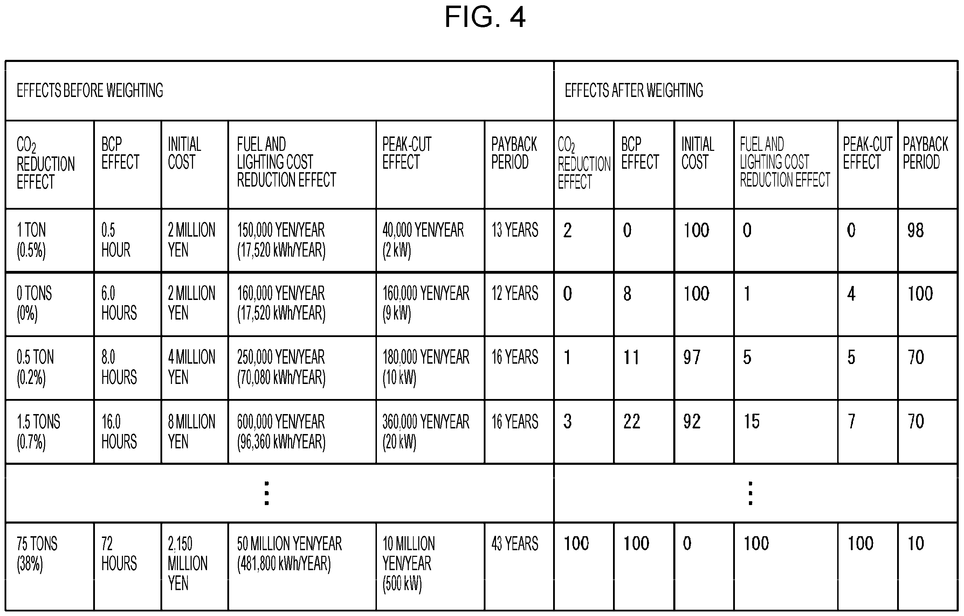

Fig. 4 is a diagram illustrating an example of a state where the control unit 10 has weighted the effects from the three perspectives on the same scale in step S4 illustrated in Fig. 2. A left part of Fig. 4 illustrates a state before the weighting and shows the same information as in the right part of Fig. 3. A right part of Fig. 4 illustrates a state after the information in the left part of Fig. 4 is weighted. As indicated in the left part of Fig. 4, the units of the elements constituting the effects from the three perspectives are not in the same dimension before the weighting. As indicated in the right part of Fig. 4, on the other hand, the elements constituting the effects from the three perspectives have values on the same scale, namely 0 to 100, after the weighting. In the embodiment, after the weighting illustrated in Fig. 4 is performed, the control unit 10 may store a result of the weighting in the storage unit 20.

In the embodiment, the storage unit 20 may thus store, for each of combinations of batteries including the three batteries, weights on the same scale for the effects from the three perspectives. In addition, in this case, the storage unit 20 may store weights with which differences between maximum values and minimum values of values indicating the effects of each of three batteries constituting each of the combinations of batteries from the three perspectives become the same.

As described above, in the embodiment, the control unit 10 may weight the effects of the combinations of batteries including the three batteries from each of the three perspectives.

After weighting the effects from the three perspectives in step S4 illustrated in Fig. 2, the control unit 10 plots, on a radar chart, results of the weighting from the three perspectives for each of the combinations of the three batteries (step S5).

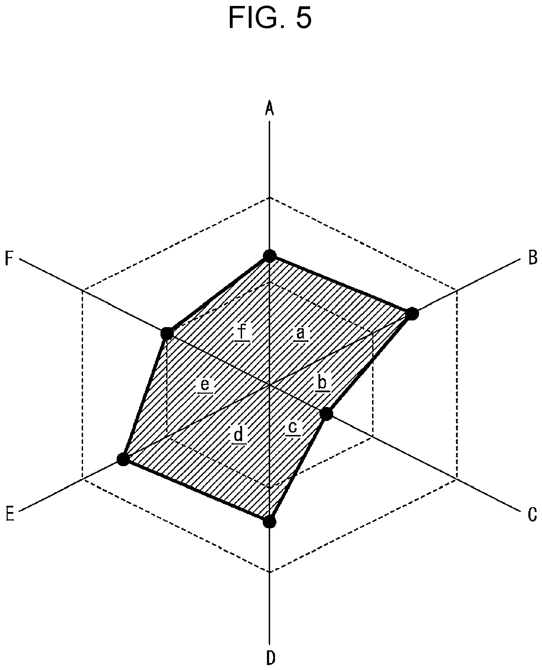

Fig. 5 is a diagram illustrating an example indicating results of the processing performed by the control unit 10 in step S5, that is, an example where results of weighting from the three perspectives, such as those illustrated in Fig. 4, are plotted on a radar chart.

Fig. 5 illustrates an example of a state where a value obtained by weighting the CO₂ reduction effect, which is element A, is plotted along an A axis of the radar chart. Fig. 5 also illustrates an example of a state where a value obtained by weighting the BCP effect, which is element B, is plotted along a B axis of the radar chart. Fig. 5 also illustrates an example of a state where a value obtained by weighting the initial costs, which are element C, is plotted along a C axis of the radar chart. Fig. 5 also illustrates an example of a state where a value obtained by weighting the fuel and lighting cost reduction effect, which is element D, is plotted along a D axis of the radar chart. Fig. 5 also illustrates an example of a state where a value obtained by weighting the peak-cut effect, which is element E, is plotted along an E axis of the radar chart. Fig. 5 also illustrates an example of a state where a value obtained by weighting the payback period, which is element F, is plotted along an F axis of the radar chart.

The radar chart of Fig. 5 indicates an example where results after the effects of one of the combinations of the three batteries illustrated in Fig. 4 from the three perspectives, for example, are weighted are plotted. In step S5 illustrated in Fig. 2, the control unit 10 may generate radar charts such as that illustrated in Fig. 5 as many as the number of combinations of the three batteries generated in step S2 illustrated in Fig. 2. That is, after the processing in step S5 is performed, a plurality of (typically a large number of) radar charts, such as that illustrated in Fig. 5, whose plotting is different from one another are generated.

After generating plotted radar charts as many as the number of combinations of the three batteries in step S5, the control unit 10 calculates the area of a polygon in each of the radar charts (step S6). In step S6, the control unit 10 can calculate, in the example illustrated in Fig. 5, for example, the area of the polygon by summing up results of calculation of the area of triangle a, triangle b, triangle c, triangle d, triangle e, and triangle f. In step S6, the control unit 10 calculates the area of polygons in the radar charts as many as the number of combinations of the three batteries. That is, in step S6, the control unit 10 calculates the area of polygons in the radar charts as many as the number of combinations of the three batteries generated in step S2 illustrated in Fig. 2.

After calculating the area of the polygon in each of the radar charts in step S6, the control unit 10 rearranges the combinations of the three batteries in descending order of the calculated area of the polygon (step S7).

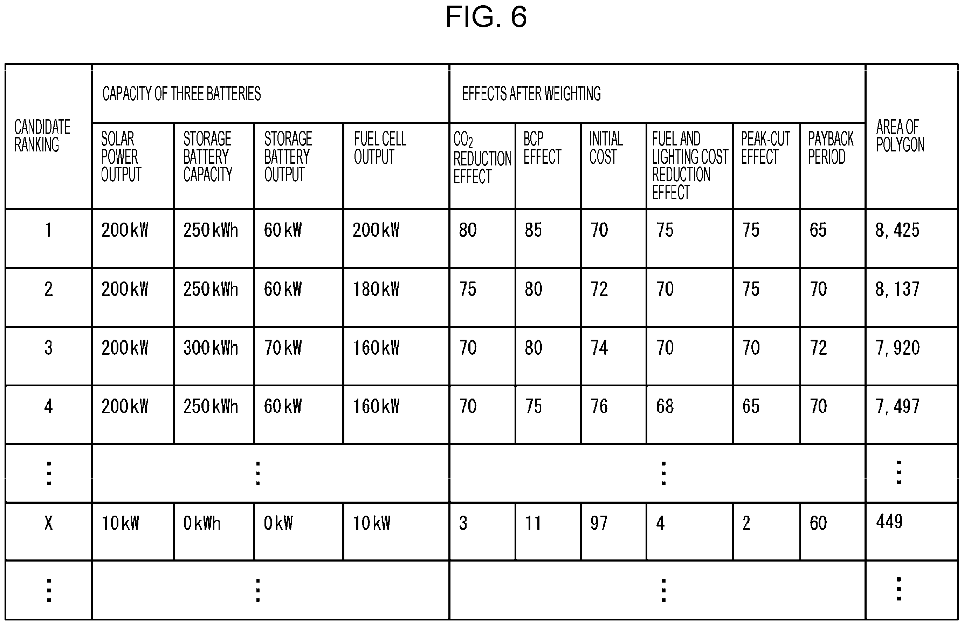

Fig. 6 is a diagram illustrating an example indicating a result of the processing performed by the control unit 10 in step S7, that is, an example where the combinations of the three batteries are rearranged in descending order of the area of the polygon calculated in a radar chart such as that illustrated in Fig. 5.

In the example illustrated in Fig. 6, the area of the polygon in the radar chart of a combination of the three batteries ranked No. 1 in candidate ranking has been calculated as 8.425. The combination of the three batteries ranked No. 1 in the candidate ranking includes a solar battery having an output of 200 kW, a storage battery having an output of 60 kW (a capacity of 250 kWh), and a fuel cell having an output of 200 kW. In addition, in the example illustrated in Fig. 6, the area of the polygon in the radar chart of a combination of the three batteries ranked No. 2 in the candidate ranking has been calculated as 8.137. The combination of the three batteries ranked No. 2 in the candidate ranking includes a solar battery having an output of 200 kW, a storage battery having an output of 60 kW (a capacity of 250 kWh), and a fuel cell having an output of 180 kW. In addition, in the example illustrated in Fig. 6, the area of the polygon in the radar chart of a combination of the three batteries ranked No. 3 in the candidate ranking has been calculated as 7.920. The combination of the three batteries ranked No. 3 in the candidate ranking includes a solar battery having an output of 200 kW, a storage battery having an output of 70 kW (a capacity of 300 kWh), and a fuel cell having an output of 160 kW.

After rearranging the combinations of the three batteries in step S7, the control unit 10 outputs information for identifying a combination of the three batteries whose polygon is the largest (step S8). When the combinations of the three batteries have been rearranged as illustrated in Fig. 6, for example, the control unit 10 may select the combination of the three batteries ranked No. 1 in the candidate ranking and output information for identifying the combination in step S8. In step S8, the information for identifying the combination of the three batteries may be, in the case of the three batteries ranked No. 1 in the candidate ranking illustrated in Fig. 6, for example, information indicating that the combination includes the solar battery having an output of 200 kW, the storage battery having an output of 60 kW (a capacity of 250 kWh), and the fuel cell having an output of 200 kW. In step S8, the control unit 10 may output, from the output unit 40, for example, the information for identifying the combination of the three batteries. By accessing such information, the user can know a combination of the three batteries that is appropriate from the environmental perspective, the safety perspective, and the economical perspective.

In addition, information output from the control unit 10 in step S8 is not limited to the information for identifying the combination of the three batteries whose polygon is the largest. For example, the control unit 10 may output, in step S8, information for identifying five or ten combinations of the three batteries whose polygons are the largest.

In the embodiment, the control unit 10 may thus perform control such that information for identifying, among combinations of batteries including the three batteries, a combination determined on the basis of an effect of each of three batteries constituting the combination of the batteries from each of the three perspectives is output. Here, the control unit 10 may perform control such that information for identifying, among the combinations of batteries including the three batteries, a combination with which the area of a polygon whose corners are points obtained by weighting the effects from the three perspectives becomes largest is output. Alternatively, the control unit 10 may perform control such that information for identifying, among the combinations of batteries including the three batteries, a combination with which the area of a polygon whose corners are points plotted on a radar chart as a result of weighting of the effects from the three perspectives becomes largest.

With the information processing apparatus 1 according to the embodiment, combinations of a solar battery, a fuel cell, and a storage battery can be presented from the environmental perspective, the safety perspective, and the economical perspective. With the information processing apparatus 1 according to the embodiment, the user can know combinations of a solar battery, a fuel cell, and a storage battery from the environmental perspective, the safety perspective, and the economical perspective when a DER system is newly introduced or the configuration of an existing DER system is changed.

When the user has input a condition other than the capacity ranges and the types of three batteries in step S1, the control unit 10 may output only combinations that satisfy the other condition among combinations of the three batteries to be output as described above.

In the embodiment, the control unit 10 may thus perform control such that information for identifying, among combinations of batteries including the three batteries, combinations that satisfy an input certain condition and that are determined on the basis of effects from the three perspectives is output. With the information processing apparatus 1 according to the embodiment, the user can know combinations of the three batteries that are appropriate from the environmental perspective, the safety perspective, and the economical perspective and that satisfy a desired condition.

In the above-described embodiment, combinations of the three batteries that are appropriate (well-balanced) from the three perspectives are presented to the user while variously changing the capacity ranges and the types of three batteries. In the embodiment, however, combinations of the three batteries that are appropriate and well-balanced from the three perspectives may be presented to the user while variously changing an operation mode (control pattern) of at least one of the three batteries, not just changing the capacity ranges and the types of three batteries. For example, the effects of the three batteries from the three perspectives can change between control pattern A, where an output of the fuel cell is 40 kW, and control pattern B, where an output of the fuel cell is 30 kW. Here, in control pattern A, for example, because an output of solar power generation becomes larger than a load during a time period for charging the storage battery, surplus power combined with an output at a time when the fuel cell performs a load-following operation may be used to charge the storage battery. In addition, in control pattern B, for example, because an output of solar power generation becomes larger than a load during a time period for charging the storage battery, surplus power combined with an output at a time when the fuel cell performs a rated output operation may be used to charge the storage battery. Combinations of the three batteries that are appropriate from the three perspectives may thus be presented to the user while variously changing a control pattern of the three batteries.

In addition, the above-described embodiment may be implemented in a scene where, for example, the user has already introduced a storage battery and is considering newly introducing batteries (a solar battery and a fuel cell) other than the storage battery. When combinations of the three batteries that are appropriate from the three perspectives are output as described above, for example, deterioration information regarding an already installed storage battery, for example, may be taken into consideration. The user may input the deterioration information regarding the storage battery from, for example, the input unit 30. In this case, the control unit 10 of the information processing apparatus 1 may prompt the user to input the deterioration information regarding the storage battery, and then detect the input. When additional information such as the deterioration information regarding the storage battery is taken into consideration like this, for example, it becomes easier for the user to determine whether to use existing equipment (batteries) continuously or introduce new equipment (batteries).

Although the embodiment has been described on the basis of the drawings and the examples, it should be noted that those skilled in the art can easily modify and correct the embodiment in various ways on the basis of the present disclosure. It should be noted, therefore, that the present disclosure includes such modifications and corrections. For example, a function or the like included in each member, each means, each step, or the like may be rearranged without causing a logical contradiction, and a plurality of means, steps, and/or the like may be combined together or divided.

The above-described embodiment is not limited to implementation of the information processing apparatus 1. For example, the above-described embodiment may be implemented as an information processing method used by an information processing apparatus such as the information processing apparatus 1, instead. Furthermore, for example, the above-described embodiment may be implemented as a program used by an information processing apparatus (computer) such as the information processing apparatus 1, instead.

The "Sustainable Development Goals (SDGs)" are 17 international goals that were adopted at a UN Summit in September 2015. The information processing apparatus 1 according to the embodiment can contribute to achievement of goals such as "7. Affordable and clean energy", "9. Industry, innovation and infrastructure", and "11. Sustainable cities and communities" among the 17 SDGs.

### Reference Signs List

- 1: information processing apparatus
- 10: control unit
- 20: storage unit
- 30: input unit
- 40: output unit
- 50: communication unit
- 100: external server

## Claims

1. An information processing apparatus that outputs information for identifying a combination of batteries including a solar battery, a fuel cell, and a storage battery, the information processing apparatus comprising:
a storage unit that stores effects of each of solar batteries, fuel cells, and storage batteries constituting the combinations of batteries from an environmental perspective, a safety perspective, and an economical perspective; and
a control unit that performs control such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.

2. The information processing apparatus according to Claim 1,
wherein the control unit performs control such that information for identifying, among the combinations of batteries, a combination with which area of a polygon whose corners are points obtained by weighting the effects from the environmental perspective, the safety perspective, and the economical perspective becomes largest is output.

3. The information processing apparatus according to Claim 2,
wherein the control unit performs control such that information for identifying, among the combinations of batteries, a combination with which area of a polygon whose corners are points plotted on a radar chart by weighting the effects from the environmental perspective, the safety perspective, and the economical perspective becomes largest is output.

4. The information processing apparatus according to Claim 2 or 3,
wherein the storage unit stores weights on a same scale for the effects of each of the solar batteries, the fuel cells, and the storage batteries constituting the combinations of batteries from the environmental perspective, the safety perspective, and the economical perspective.

5. The information processing apparatus according to Claim 4,
wherein the storage unit stores weights with which differences between maximum values and minimum values of values indicating the effects of each of the solar batteries, the fuel cells, and the storage batteries constituting the combinations of batteries from the environmental perspective, the safety perspective, and the economical perspective become a same value.

6. The information processing apparatus according to any of Claims 1 to 5,
wherein the storage unit stores an effect, produced by each of the solar batteries, the fuel cells, and the storage batteries constituting the combinations of batteries, of reducing generation of carbon dioxide at a facility provided with the combinations of batteries as the effect from the environmental perspective.

7. The information processing apparatus according to any of Claims 1 to 6,
wherein the storage unit stores an effect, produced by each of the solar batteries, the fuel cells, and the storage batteries constituting the combinations of batteries, of promoting a business continuity plan at a facility provided with the combinations of batteries as the effect from the safety perspective.

8. The information processing apparatus according to any of Claims 1 to 7,
wherein the storage unit stores at least one of an initial cost of installation of the combinations of batteries, a fuel and lighting cost reduced at a facility provided with the combinations of batteries, a peak-cut effect at the facility provided with the combinations of batteries, and a period over which an invested cost of the installation and/or maintenance of the combinations of batteries is recovered corresponding to each of the solar batteries, the fuel cells, and the storage batteries constituting the combinations of batteries as the effect from the economical perspective.

9. The information processing apparatus according to any of Claims 1 to 8,
wherein the control unit performs control such that information for identifying, among the combinations of batteries, a combination that satisfies an input certain condition and that is determined on a basis of effects of each of the solar batteries, the fuel cells, and the storage batteries constituting the combinations of batteries from the environmental perspective, the safety perspective, and the economical perspective is output.

10. An information processing method for outputting information for identifying a combination of batteries including a solar battery, a fuel cell, and a storage battery, the information processing method comprising:
a storage step of storing effects of each of solar batteries, fuel cells, and storage batteries constituting the combinations of batteries from an environmental perspective, a safety perspective, and an economical perspective; and
a control step of performing control such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.

11. A program for outputting information for identifying a combination of batteries including a solar battery, a fuel cell, and a storage battery, the program causing an information processing apparatus to perform:
a storage step of storing effects of each of solar batteries, fuel cells, and storage batteries constituting the combinations of batteries from an environmental perspective, a safety perspective, and an economical perspective; and
a control step of performing control such that information for identifying, among the combinations of batteries, a combination determined on a basis of the effects of each of the solar batteries, the fuel cells, and the storage batteries constituting the combinations of batteries from the environmental perspective, the safety perspective, and the economical perspective is output.
